# EUROPEAN PATENT APPLICATION

(11) **EP 2 159 085 A1**
(43) Date of publication of application: **03.03.2010**
(21) Application number: 08163296.0
(22) Date of filing: 29.08.2008
(51) Int. Cl.: B60H 1/08

(54) **Heat transfer circuits for vehicles**

(71) Applicant: CATERPILLAR INC., Peoria IL 61629-6490 (US)
(72) Inventor: BARRIOL, Pierre, PEORIA, IL 61629-6490 (US); BICREL, Christophe, PEORIA, IL 61629-6490 (US); LOWRY, Brian, PEORIA, IL 61629-6490 (US)
(74) Representative: Modiano, Micaela Nadia

(57) **Abstract**

A heat transfer circuit for a vehicle comprises a conduit for transferring heat from an engine to a cab by means of a transfer fluid, a heat emitter positioned at the conduit for emission of heat external to the vehicle; and a control valve coupled to the conduit for partitioning circulation of the transfer fluid between the cab and the heat emitter.

## Description

### Technical Field

This disclosure generally relates to the field of heat transfer circuits and methods therefor in motor vehicles such as industrial vehicles and engineering vehicles and, in particular, to heat transfer circuits for optimal cooling of an engine and heating of a cab of the vehicle.

### Background

Operational temperatures of an engine of a motor vehicle may be maintained at an optimum level for proper functioning of the engine. Generally, a motor vehicle may have a cooling system to dissipate heat generated by the engine. Hence, it may be possible to prevent the engine from overheating by cooling the engine. Efficient and intensive cooling of the engine may be significant, particularly with heavy load bearing engineering vehicles.

The cooling system of a motor vehicle may consist of a heat dissipating pipe system with an air cooled radiator for cooling a coolant liquid. A pump may circulate the coolant through the engine and then to the radiator and may thereby transfer heat from the engine to the radiator. Coolant cooled by the radiator may pass through a radiator return line to a thermostat and back to the pump through a pump return line. The main thermostat may control the flow through the radiator by preventing flow of the coolant before the engine has reached an appropriate operational temperature.

Heat from the engine may be transferred to the passenger compartment of a motor vehicle such as a cab of an industrial vehicle. Transferring of heat to the passenger compartment, such as a cab of an industrial vehicle, may be brought about by known methods. For instance, the passenger compartment may be heated by circulating heated liquid coolant to a heat exchanger located in the passenger compartment. Hoses may be used to circulate the liquid coolant.

Heat may be also transferred from a radiator by moving air heated by the radiator to the passenger compartment through a conduit which may be connected between the passenger compartment and the radiator. The transfer of heated air may dissipate heat from the liquid coolant in the radiator and warm the passenger compartment.

The present disclosure is directed, at least in part, to improving or overcoming one or more aspects of the prior art systems.

### Brief Summary of the Invention

In a first aspect, the present disclosure describes a heat transfer circuit for transferring heat from an engine to a cab in a vehicle comprising a heat emitter for emission of heat external to the vehicle and a control valve for regulating circulation of a transfer fluid to transfer heat between the cab and the heat emitter.

In a second aspect, the present disclosure describes a method of regulating heat dissipated from an engine in a vehicle comprising: transferring heat from an engine towards a cab by a transfer fluid flowing in a conduit that connects the engine to the cab; and commanding a control valve, provided in the conduit, to partition circulation of the transfer fluid between the cab and a heat emitter positioned at the conduit for emission of heat external to the vehicle.

### Brief Description of the Drawings

The foregoing and other features and advantages of the present disclosure will be more fully understood from the following description of various embodiments, when read together with the accompanying drawings, in which:
Fig. 1 is a schematic representation of a heat transfer circuit according to the present disclosure;
Fig. 2 is a schematic representation of a first embodiment of a heat transfer circuit according to the present disclosure; and
Fig. 3 is a schematic representation of a second embodiment of a heat transfer circuit according to the present disclosure.

### Detailed Description

This disclosure generally relates to apparatuses and methods for transferring heat away from an engine of a vehicle, particularly for transferring heat from the engine to either a passenger compartment of the vehicle or to the environment external to the vehicle.

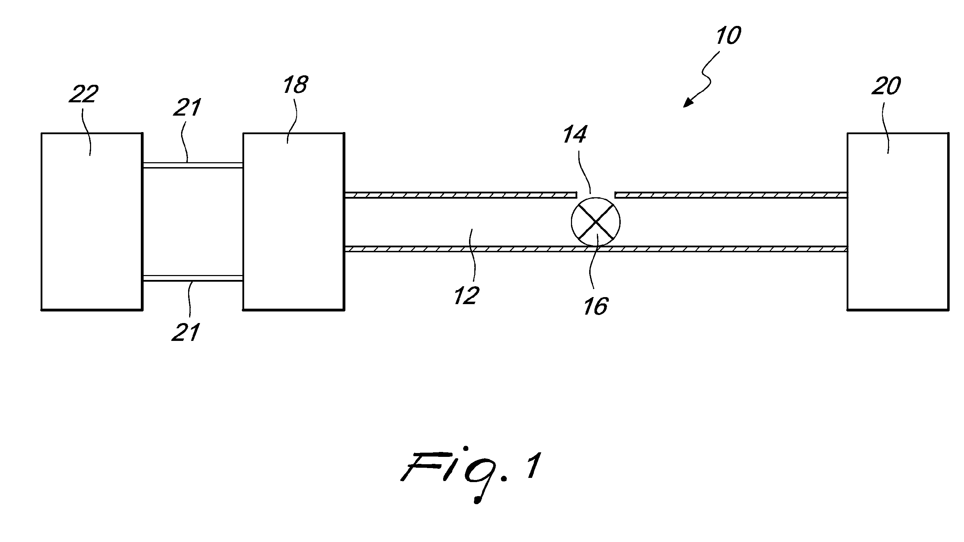

Fig. 1 illustrates a heat transfer circuit **10** according to the present disclosure. The heat transfer circuit **10** may comprise a conduit **12,** a heat emitter **14** and a control valve **16.**

The conduit **12** may transfer heat generated in an engine **18** to a passenger compartment, for instance to a cab **20.** At an end, the conduit **12** may be coupled to the engine **18.** The conduit **12** may be coupled to the engine **18** in a suitable manner such that heat produced in the engine may be transferred to the conduit **12.** At the other end, the conduit **12** may be coupled to the cab **20.** The conduit **12** may be coupled to the cab **20** in a suitable manner such that heat in the conduit **12** may be transferred to the cab **20.**

The engine **18** may be connected to a known cooling system such as a radiator **22** through pipe system **21.**

The conduit **12** may also transfer heat from engine **18** to heat emitter **14.** Heat emitter **14** may be positioned on the conduit **12** in a suitable manner for transfer of heat from conduit **12** to the environment external to a vehicle.

Valve **16** may be coupled to the conduit **12.** Valve **16** may control the amount of heat transferred through conduit **12** to cab **20** or to heat emitter **14.** Valve **16** may be actuated to permit more heat to pass through conduit **12,** thereby more heat may be transferred to cab **20** and less heat may be transferred to heat emitter **14.** Valve **16** may be actuated to permit less heat to pass though conduit **12,** thereby less heat may be transferred to cab **20** and more heat may be transferred to heat emitter **14.**

Valve **16** may divert the passage of heat through the conduit **12** so that less heat may be transferred to the cab **20** while the total amount of heat dissipated through conduit **12** remains substantially constant.
In an embodiment, valve **16** may be actuated to block passage of heat to both cab **20** and heat emitter **14.**

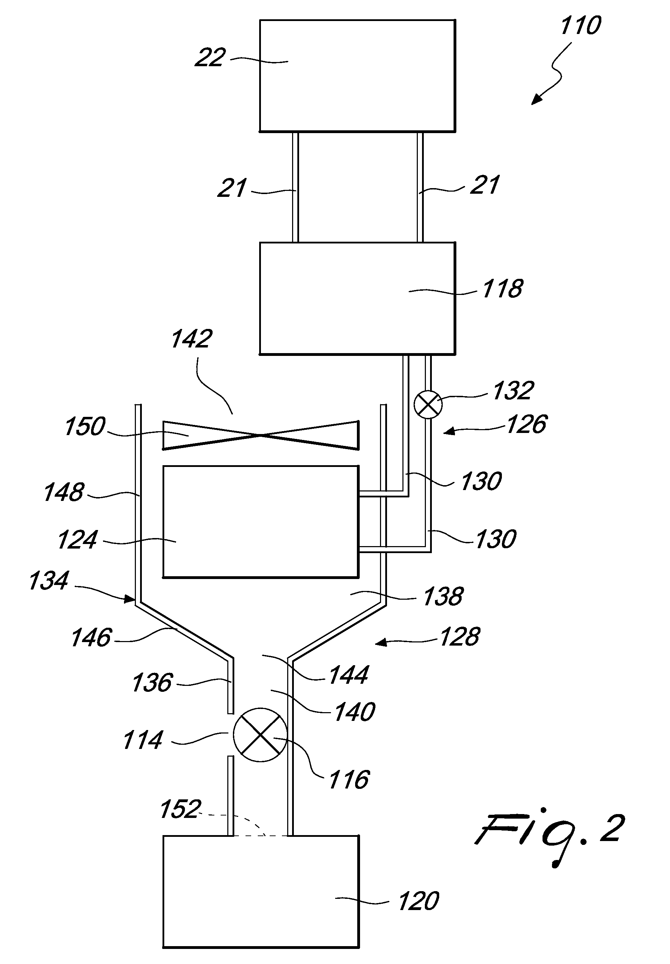

Fig. 2 illustrates a first embodiment of the heat transfer circuit **110** according to the present disclosure. The heat transfer circuit **110** may further comprise a remote heat exchanger **124** connected to the conduit **112** and may be positioned between the engine **118** and the cab **120.** The heat transfer circuit **110** may comprise a coolant fluid for transfer of heat from the engine **118** to the remote heat exchanger **124.** The coolant fluid may circulate through engine components, absorb heat therefrom and transfer the heat to the remote heat exchanger **124.** The remote heat exchanger **124** may enable transfer of heat from the heated coolant fluid to a transfer fluid.

The conduit **112** may comprise a first section **126** and a second section **128** for transferring heat from the engine **118** through the remote heat exchanger **124** to the cab **120.** The first section **126** may be coupled to the engine **118** at an end and may be connected to the remote heat exchanger **124** at the other end such that heat from the engine may be transferred by the coolant fluid from the engine **118** to the remote heat exchanger **124.** The second section **128** may be coupled to the remote heat exchanger **124** at an end and may be coupled to the cab **120** at the other end such that heat from the remote heat exchanger **124** may be transferred by the transfer fluid to the cab **120.**

The first section **126** may comprise pipes **130** for circulation of the coolant fluid between the engine **118** and the remote heat exchanger **124.** Pipes **130** may be connected to the remote heat exchanger **124** by any suitable means for flow of the coolant fluid to and from the remote heat exchanger **124** through the pipes **130.** Pipes **130** may be coupled to the engine **124** for passage of the coolant fluid through the engine components.

Pipes **130** may comprise a supply line for passage of coolant fluid from the engine **118** to the remote heat exchanger **124** and a return line for passage of coolant fluid from the remote heat exchanger **124** to the engine **118.**

The first section **126** may further comprise a coolant valve **132** for controlling the flow of the coolant fluid through the pipes **130.** The coolant valve **132** may be positioned at the supply line of the return line. In an open position, the coolant valve **132** may permit circulation of the coolant fluid between the remote heat exchanger **124** and the engine **118.** The coolant valve **132** may be actuated to a close position which may prevent circulation of the coolant fluid.

The first section **126** may further comprise a pump for circulation of the coolant fluid through pipes **130.** The first section **126** may also further comprise a thermostat for monitoring the temperature of the coolant fluid.

The second section **128** may be an air duct, which may comprise a hood **134** and a channel **136.** The hood **134** may have at least two openings. A first opening may be an inlet **142** and a second opening may be an outlet **144.**

In an embodiment, the hood **134** may further comprise an outlet portion **146** and an inlet portion **148.** The walls of the outlet portion may diverge from the outlet **144** at one end and connect to the walls of the inlet portion **148** at the other end.

A first air passage **138** may be formed within the interior of the hood **134** encompassed by the walls of hood **134.** A second air passage **140** may be formed within the interior of channel **136** encompassed by the walls of channel **136.**

The first air passage **138** may be wider at the inlet portion **148** and may be narrower at the outlet portion **146.** As air flows through the first air passage **138** from the inlet portion **148** to the outlet portion **146** the speed of the air flow may increase due to the reduction in the amount of available space. The rate of air flow through first air passage **138** may increase prior to entry of the air into the second air passage **140.**

Inlet **142** may allow the first air passage **138** to communicate with external air space and may allow passage of air into hood **134.** Outlet **144** may allow the first air passage **138** to communicate with the second air passage **140** and may allow passage of air from the hood **134** into the channel **136.**

The skilled person would appreciate that the inlet **142** and outlet **144** may be formed on any wall or may be in any suitable position on the walls of hood **134.** In an embodiment, the inlet **142** and outlet **144** may be formed on opposite walls of hood **134.** In another embodiment, the inlet **142** may be formed in place of a wall.

The remote heat exchanger **124** may be located in the first air passage **138** and may be surrounded by the walls of the inlet portion **148.** The airflow entering through inlet **142** into the first air passage **138** may be directed to flow over the remote heat exchanger **124** so that heat may be transferred from the remote heat exchanger **124** to the flowing air. Heated air flows from the first air passage **138** to the second air passage **140.**

The heat transfer circuit **110** may further comprise a fluid circulator **150.** Ambient air may be directed into the first air passage **138** through inlet **142** by the fluid circulator **150.** Fluid circulator **150** may also circulate the air in the first air passage **138** before the air exits through the outlet **144.**

The fluid circulator **150** may be suitably provided as required. For instance, the fluid circulator **150** may be an air intake formed at the inlet **142** whereby the movement of the machine, such as a vehicle, forces air through inlet **142** thereby driving circulation of air through the first air passage **138.**

In another embodiment, the fluid circulator **150** may be a fan. Rotation of the fan may draw air in through the inlet **142** and may force air out through the outlet **144.** The fan may be directly connected to the engine **118** such that the fan may be driven at the engine speed or a mechanical clutch may be provided between the fan and the engine **118** to vary the speed of the fan. In a further embodiment, the fluid circulator **150** is a hydraulic fan wherein the fan is connected to a hydraulic motor.

The fan may be positioned either between the inlet **142** and the remote heat exchanger **124** or between the remote heat exchanger **124** and the outlet **144.** In a further embodiment, the inlet **142** may be positioned between the fluid circulator **150** and the remote heat exchanger **124.** Heat emitter **114** may be positioned on second section **128.** In an embodiment, heat emitter **114** may be an aperture for release of heated air from the second section **128** to the environment external to the vehicle. Second air passage **140** may communicate to the external environment through heat emitter **114.**

Control valve **116** may be coupled to second section **128.** In an embodiment, valve **136** may be coupled to the channel **136** in the second air passage **140** at the junction of heat emitter **114** and second air passage **140.** Valve **116** may be in a position to control and direct flow of air through second section **128** to cab **120** and to heat emitter **114.**

Heat may be transmitted from remote heat exchanger **124** to the surrounding air within first air passage **138.** Heated air may then flow from the first air passage **138** to the second air passage **140.** The valve **116** may regulate the passage of heat through second section **128** to the cab **120** and to heat emitter **114** by regulating the flow of heated air through second air passage **140** to cab **120** and heat emitter **114.**

In a fully open position, valve **116** may seal second air passage **140** from heat emitter **114** and thereby may permit unobstructed flow of air through second section **128** to cab **120.** In a closed position valve **116** may obstruct second section **128** such that no air flows to cab **120** and may direct air to exit second section **128** through heat emitter **114.** Valve **116** may be actuated to a specific partially open position wherein second air passage **140** may be partially obstructed and whereby air flowing through channel **136** may be divided so that a part of the air may be directed to cab **120** and the remaining part may be directed to heat emitter **114.** The partially open position may be one of a plurality of positions between a fully closed and a fully open position.

Channel **136** may be coupled to cab **120** at vent **152** by any suitable means for conveying air from the second air passage **140** to the interior of the cab **120.** In an embodiment, walls of channel **136** may be connected to walls of cab **120** such that there may be direct communication between the second air passage **140** and the interior of cab **120.**

In another embodiment a screen may be provided at vent **152** between second air passage **140** and the interior of cab **120.** A screen may be, for instance, a wire gauze for trapping dust. In yet another embodiment the screen may be in a form of slats for directing air flow to a region in the cab **120.** The slats may overlap in a closed position such that the second air passage **140** may be substantially sealed from the interior of the cab **120.**

A heat transfer circuit **110** may comprise a vent having such slats and may not comprise a valve **114.** In this embodiment the flow of air from second section **128** to cab **120** may be controlled by the slats. In a fully closed position of the slats, flow of air into cab **120** may be obstructed by slats and a substantially static air column may be formed in second section **128** between vent **152** and heat emitter **114.** Air flowing from first air passage **138** into second air passage **140** may flow to and against the static air column and may be deflected out through heat emitter **114.**

The rate of air flowing through second section **128** may be related to the rate of air entering inlet **142** and exiting through either heat emitter **114** or cab **120** or either through heat emitter **114** and cab **120.** The rate of air flow may affect the rate of heat dissipated from remote heat exchanger **124** and the rate of transfer of heat to cab **120** or to the external environment. The rate of air flow may be generally determined by the fan speed. However, external conditions may also affect the rate of air flow.

In operation, engine **118** may undergo an increase in temperature. Heat produced by the engine may be transferred to the coolant fluid circulating through pipes **130.** Heat from the coolant fluid may be transferred to the transfer fluid flowing over the remote heat exchanger **124.** The heated transfer fluid may carry heat from the first air passage **138** to the second air passage **140.**

If heat is required in the cab **120,** valve **116** may be actuated to the open position and the heated transfer fluid may flow through the channel **136** to the cab **120.**

If heat is not required or not desired in cab **120,** valve **116** may be actuated to the closed position and heated transfer fluid may be diverted to the heat emitter **114.**

If a limited amount of heat is desired for transfer to cab **120,** valve **116** may be actuated to one of a plurality of partially positions between the fully open position and the closed position. Heated transfer fluid may be divided in the pipe **130** by the valve **116** and a part of the heated transfer fluid may flow to cab **120** and the remainder of the heated transfer fluid may be directed to the heat emitter **214.**

In an embodiment the heat transfer circuit **110** may be deactivated by actuating the coolant valve **132** to the position such that coolant fluid may be obstructed from circulating through pipes **130** and, in the embodiment wherein the fluid circulator **150** is a fan, the fan may be deactivated.

In another embodiment the heat transfer circuit **110** may be used to blow unheated air to cab **120** by actuating the coolant valve **132** to the position such that coolant fluid may be obstructed from circulating through pipes **130,** activating the fan and actuating valve **116** to the open position. Unheated air may be blown from first air passage **138** through the second air passage **140** to cab **120.**

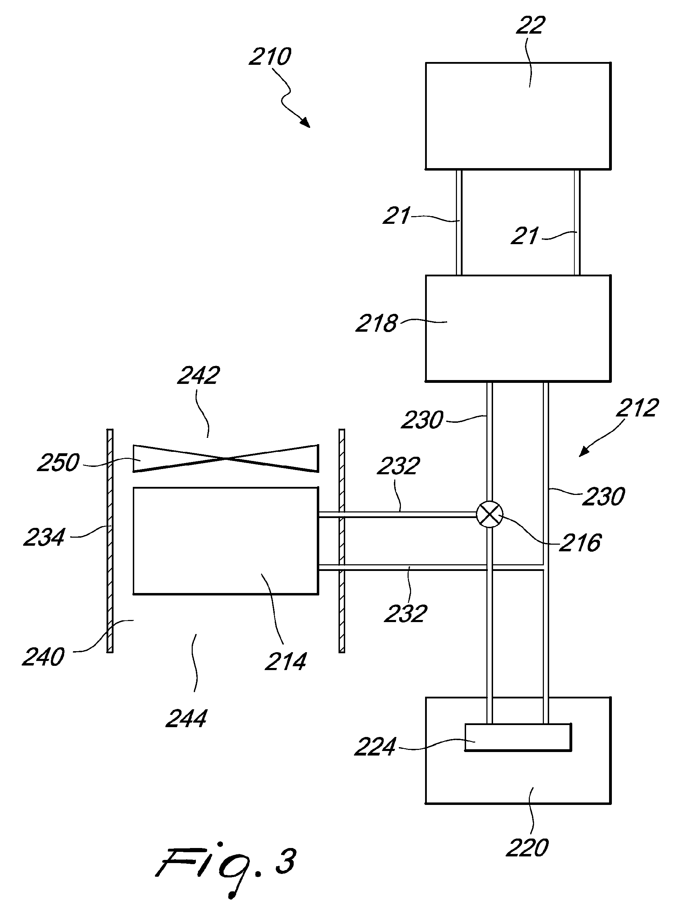

Fig. 3 illustrates a second embodiment of the heat transfer circuit **210** according to the present disclosure. The heat transfer circuit **210** may further comprise a remote heat exchanger **224** connected to the conduit **212** and positioned at cab **220.** The heat transfer circuit **210** may comprise a transfer fluid for transferring of heat from the engine **218** to the remote heat exchanger **224.** The transfer fluid may circulate through engine components, absorb heat therefrom and transfer the heat to the remote heat exchanger **224.** The remote heat exchanger **224** may enable transfer of heat from the heated transfer fluid to the interior of the cab **220.**
The conduit **212** may comprise pipes **230** for passage of the transfer fluid between the engine **218** and the remote heat exchanger **224.** The pipes **230** may be connected to the remote heat exchanger **224** by any suitable means such that the transfer fluid may flow from and to the remote heat exchanger **224** through pipes **230** and may be coupled to the engine **224** for passage of the transfer fluid through the engine components. The transfer fluid may be a liquid for instance a coolant.

Pipes **230** may further comprise a pump for circulation of the transfer fluid and may also further comprise a thermostat for monitoring the temperature of the transfer fluid.
Pipes **230** may comprise of a supply line for passage of transfer fluid from the engine **218** to the remote heat exchanger **224** and a return line for passage of transfer fluid from the remote heat exchanger **224** to the engine **218.**

Heat emitter **214** may be positioned at pipes **230.** In an embodiment heat emitter **214** may be an auxiliary heat exchanger. Heat emitter **214** may be connected to conduit **212** by a pipe extension **232.** Heat may be released from the heat emitter **214** to the environment external to the vehicle. Heat emitter **214** may be connected to pipes **230** through pipe extension **232** such that transfer fluid may flow to and from heat emitter **214** through pipe extension **232.**

Pipe extension **232** may comprise a supply line for passage of transfer fluid from the supply line of pipes **230** to the heat emitter **214** and a return line for passage of coolant fluid from the heat emitter **214** to the return line of pipes **230.**

In an embodiment, the heat emitter **214** may be encompassed in a hood **234.** An air passage **240** may be formed within the interior of the hood **234** encompassed by the walls of hood **134.** The hood **234** may have an inlet **242** and an outlet **244** for communication of the air passage **240** with ambient air. Air flowing through air passage **240** may flow over the heat emitter **214** and transfer heat from the heat emitter **214** to the ambient air. In yet another embodiment, a fan **250** may be provided to circulate air through air passage **240.**

Control valve **216** may be coupled to pipes **230.** Valve **216** may be coupled to pipes **230** at the junction of pipes **230** supply line and pipe extension **232** supply line. Valve **216** may be in a position to control and direct flow of the transfer fluid through pipe **230** to remote heat exchanger **224** and heat emitter **214.**

The valve **216** may regulate the passage of heat to the remote heat exchanger **224** at cab **220** and to heat emitter **214** by regulating the flow of heated transfer fluid through pipes **230.**

In a fully open position, valve **216** may close an access to a pipe extension **232** and may permit unobstructed flow of transfer fluid through pipes **230** to remote heat exchanger **224.** In a closed position, valve **216** may obstruct pipes **230** such that the transfer fluid may flow through a pipe extension **232** to the heat emitter **214** and back to pipe **230** bypassing remote heat exchanger **224.** Valve **216** may be actuated to a specific partially open position wherein pipe **230** may be partially obstructed and whereby transfer fluid may be divided such that a part of the fluid may be directed to remote heat exchanger **224** and the remaining part may be directed to the heat emitter **214.** The partially open position may be one of a plurality of positions between a fully closed and a fully open position.

In an embodiment, valve **216** may be adapted to close access to both pipes **230** and pipe extension **232** simultaneously so that circulation of the transfer fluid is prevented.
Additional valves may be provided at pipes **230** and pipe extension **232** for regulation of flow of the transfer fluid through pipes **230** and pipe extension **232.**

In operation, engine **218** may undergo an increase in temperature. Heat produced by the engine may be transferred to the transfer fluid circulating through pipes **230.**

If heat is required in the cab **220,** valve **216** may be actuated to the open position and heated transfer fluid may flow from pipes **230** to the remote heat exchanger **224.**

If heat is not required or not desired in cab **220,** valve **216** may be actuated to the closed position and heated transfer fluid may flow from a pipe **230** through the pipe extension **232** to the heat emitter **214.**

If a limited amount of heat is desired for transfer to cab **220,** valve **216** may be actuated to one of a plurality of partially positions between a fully open position and a closed position. Heated transfer fluid may be divided in the pipe **230** by the valve **216** and a part of the heated transfer fluid may flow to remote heat exchanger **224** and the remainder of the heated transfer fluid may be directed to the heat emitter **214.**

In an embodiment, the heat transfer circuit **210** may be deactivated by actuating the valve **216** to the closed position such that transfer fluid may be obstructed from circulating through pipes **230** and pipe extension **232.**

The valve **16** of the foregoing embodiments may be suitably formed to direct a transfer fluid through conduit **12.** In an embodiment, valve **16** may be a flat barrier. Valve **16** may be positioned at the heat emitter **114** of the first embodiment or at the opening of pipe extension **232** of the second embodiment. Valve **16** may be of a suitable shape to cover or fit over heat emitter **114** or opening of pipe extension **232.** Edges of valve **16** may be bevelled in order to reduce turbulence in flow of the transfer fluid.

The heat transfer circuit **10** may further comprise an actuator configured to actuate the valve **16** in the conduit **12.** Preferably, the actuator may rotate the valve **16** relative to heat emitter **114** or opening to pipe extension **232.** Preferably, the actuator may be a hydraulic actuator.

The valve **16** may be connected, by any suitable means, to conduit **12.** In an embodiment, the valve **16** may be pivotably connected to the conduit **12** such that the rotation of the valve **16** about the point of connection may determine the rate and direction of flow of the transfer fluid.

Valve **16** may rotate about the connection from a closed position to a fully open position.

In the open position, valve **16** may be in alignment with a wall of conduit **12** to cover or fit into over heat emitter **114** or opening of pipe extension **232.** Valve **16** may be, in the open position, at substantially 0° relative to heat emitter **114** or opening to pipe extension **232.**
In the fully open position, valve **16** may be substantially perpendicular to heat emitter **114** or opening of pipe extension **232** and may be located within conduit **12.** The valve **16** may be, in the fully open position, at substantially 90° relative to heat emitter **114** or opening of pipe extension **232.**

Valve **16** may also be rotated to a specific partially open position, which may be one of a range of positions between a closed and fully open position. Valve **16** may have a specific partially open position, which may be at an angle substantially between 0° and 90° relative to heat emitter **114** or opening to pipe extension **232.**

Valve **16** may be electrically connected to a control system controlled actuation. Cab **20** may be provided with a heat sensor, which may be connected to the controlled system.

The skilled person would realise that the foregoing embodiments may be modified or changed to obtain the heat transfer circuit or the desired outcome of the present disclosure.

### Industrial Applicability

This disclosure describes a heat transfer circuit for transfer of heat generated by the engine, to a passenger compartment wherein there is a need for heating the compartment, or to the environment external to the vehicle wherein additional cooling of the engine is advantageous and no heating is desired in the compartment.

Particularly, in the operation of an engine **14,** heat may be generated by the engine. Such heat produced may thus be used to heat the passenger compartment of the vehicle thereby avoiding providing a separate heating system for the passenger compartment.

The heat transfer circuit **10** of the present disclosure may serve as a supplementary engine cooling system to an existing engine cooling system such as a radiator **22** so that, if less heat is required in cab **20,** valve **16** may redirect heat to the heat emitter **14** for transferring heat to the environment external to the vehicle.

The industrial applicability of the heat transfer circuit and method for regulating heat dissipated from the engine as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A heat transfer circuit (10, 110, 210) for a vehicle comprising:
a conduit (12, 112, 212) for transferring heat from an engine (18, 118, 128) to a cab (20, 120, 220) by a transfer fluid;
a heat emitter (14, 114, 214) positioned at the conduit for emission of heat external to the vehicle; and
a control valve (16, 116, 216) coupled to the conduit for partitioning circulation of the transfer fluid between the cab and the heat emitter.

2. The circuit according to claim 1 further comprising a remote heat exchanger (124) positioned between the engine and the cab.

3. The circuit according to claim 2 wherein the transfer fluid is gaseous.

4. The circuit according to claim 3 wherein a section of the conduit comprises an air duct (128) coupled between the remote heat exchanger and the cab for circulation of the gaseous transfer fluid.

5. The circuit according to claims 2, 3, or 4 wherein the heat emitter is an aperture for release of the gaseous transfer fluid.

6. The circuit according to claims 2, 3, 4 or 5 wherein a section (126) of the conduit comprises pipes (130) for connecting the remote heat exchanger to the engine, the pipes comprising a coolant fluid for transfer of heat from the engine to the remote heat exchanger.

7. The circuit according to claim 6 further comprising a coolant valve (132) coupled to the pipes.

8. The circuit according to one or more of claims 2 through 7 further comprising a fluid circulator (150) for circulating the gaseous transfer fluid.

9. The circuit according to claim 1 further comprising a remote heat exchanger (224) positioned in the cab.

10. The circuit according to claim 9 wherein the transfer fluid is a liquid.

11. The circuit according to claims 9 or 10 wherein the heat emitter is an auxiliary heat exchanger.

12. An engineering vehicle comprising the heat transfer circuit according to any one of claims 1 to 11.

13. A method of regulating heat dissipated from an engine in a vehicle comprising:
transferring heat from an engine (18, 118, 218) towards a cab (20, 120, 220) by a transfer fluid flowing in a conduit (12, 112, 212) that connects the engine to the cab; and
commanding a control valve (16, 116, 216), provided in the conduit (12, 112, 212), to partition circulation of the transfer fluid between the cab and a heat emitter (14, 114, 214) positioned at the conduit for emission of heat external to the vehicle.

14. A method according to claim 13 wherein the step of transferring heat from the engine to the cab comprises a step of transmitting heat to a remote heat exchanger (124, 224) proximate to the cab.

15. A method according to claim 13 wherein the transfer fluid is gaseous and the heat emitter is an aperture for external release of the gaseous transfer fluid.
